# EUROPEAN PATENT APPLICATION

(11) **EP 2 642 643 A1**
(43) Date of publication of application: **25.09.2013**
(21) Application number: 12160809.5
(22) Date of filing: 22.03.2012
(51) Int. Cl.: H02K 15/00

(54) **Method for retrofit a conductive bar**

(71) Applicant: Alstom Technology Ltd, 5400 Baden (CH)
(72) Inventor: Stein, Ruediger, 79804 Dogern (DE); Ziegler, Alfred, 5408 Ennetbaden (CH); Vezzoli, Massimiliano, 5236 Remigen (CH)

(57) **Abstract**

A yard (1) includes an electric machine (2) having a slot (3) housing the conductive bar (4). The conductive bar (4) comprises a conductive element (5), original insulation (6) around the conductive element (5). The method comprises removing the conductive bar (4) from the slot (3), removing the original insulation (6) from the conductive element (5), applying new insulation (7) around the conductive element (5) on the yard (1).

## Description

### TECHNICAL FIELD

The present invention relates to a method for retrofit a conductive bar. The conductive bar can be a stator or rotor bar of an electric machine such as a turbogenerator or hydro generator, electric motor, etc.

### BACKGROUND

Conductive bars such as stator or rotor bars of electric machines include a conductive element that is insulated by main insulation.

The conductive element is usually made of transposed copper strands slightly insulated from one another, and the main insulation is usually made of a mica tape wrapped around the conductive element and impregnated with a resin.

In order to manufacture these conductive bars, EP 2 339 722 discloses a method including the steps of:
- preparing the conductive element,
- wrapping a mica tape around the conductive element,
- enclosing the conductive element with the mica tape around it in a flexible sleeve,
- applying a vacuum,
- supplying resin into the sleeve at a low pressure,
- curing the resin.

This method allows new conductive bars to be manufactured; nevertheless, during maintenance operations of existing generators or other electric machines it is in some cases needed to replace one or even more damaged conductive bars (such as stator bars). When this occurs, new conductive bars are manufactured in a workshop and are then delivered to the yard (where the electric machine under maintenance is located).

In some cases it could not be possible to promptly provide the new conductive bars to the yard; this can render the time for maintenance unacceptably long.

### SUMMARY

An aspect of the disclosure includes providing a method by which during maintenance operation the conductive bars to be assembled on an electric machine can be promptly made available.

These and further aspects are attained by providing a method in accordance with the accompanying claims.

### BRIEF DESCRIPTION OF THE DRAWINGS

Further characteristics and advantages will be more apparent from the description of a preferred but non-exclusive embodiment of the method, illustrated by way of non-limiting example in the accompanying drawings, in which:

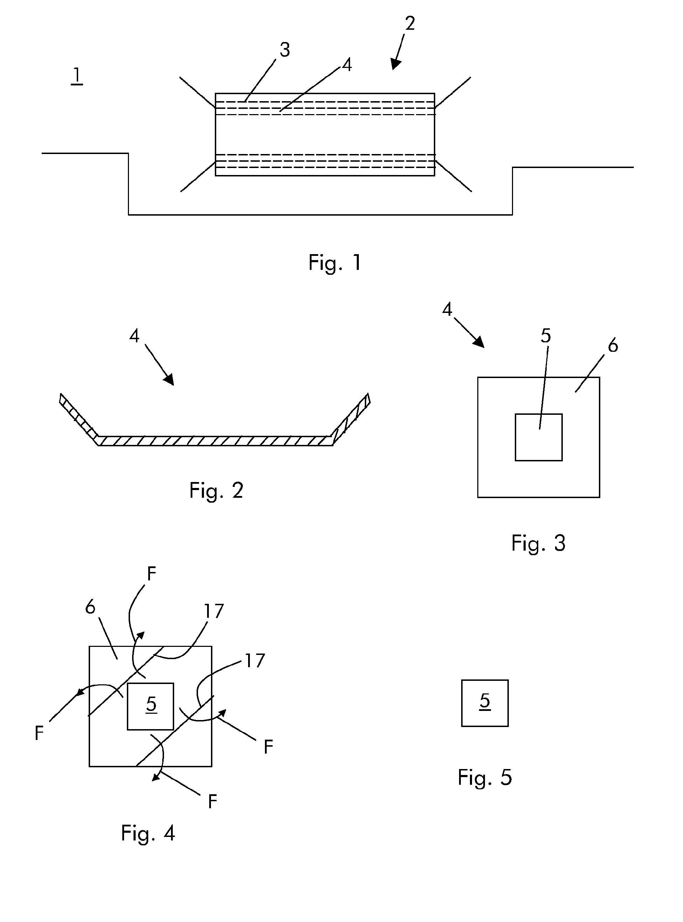

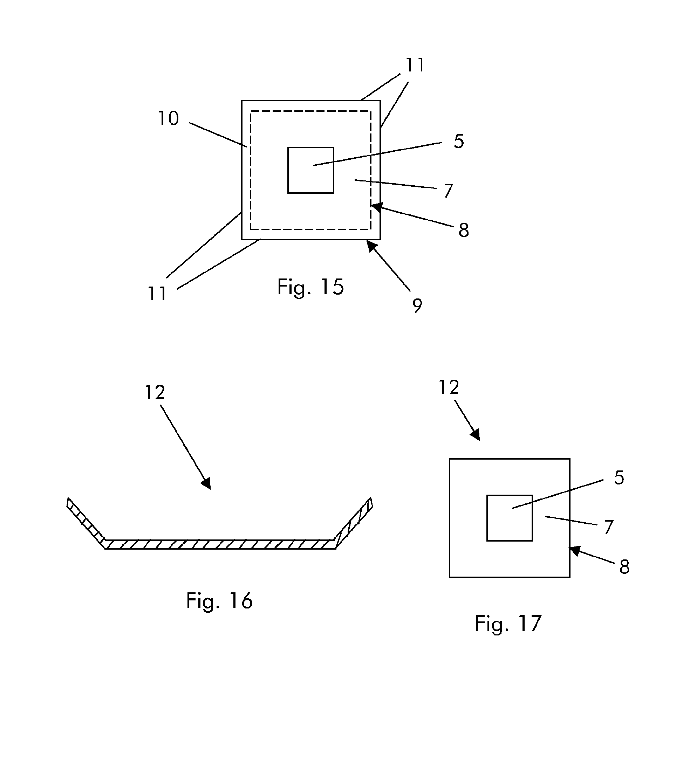

Figures 1-17 show possible embodiments of the method.

### DETAILED DESCRIPTION OF EMBODIMENTS OF THE INVENTION

Figure 1 shows a yard 1 that includes an electric machine 2 having slots 3 housing conductive bars 4.

The electric machine 2 is preferably a rotating electric machine, such as a generator or a motor; anyhow the electric machine can also be a different (i.e. nonrotating) electric machine, such as a transformer.

In the example of figure 1 the electric machine is a generator such as for example a turbogenerator or a hydro generator; for this reason the electric machine is connected to an engine such as for example a gas turbine or a steam turbine (for the turbogenerator) or a hydro turbine (for the hydro generator). In these examples the turbogenerator or hydro generator is usually a synchronous generator, it is anyhow clear that the generator can also be an asynchronous or a different generator.

The conductive bar 4 can be a stator bar but in different applications it can be a rotor bar.

The conductive bar 4 comprises a conductive element 5 (usually comprising a plurality of transposed strands) and an original insulation 6 around the conductive element 5; the original insulation 6 is the insulation that the conductive bar 4 has during operation before the outage for maintenance operation. The original insulation can be damaged during operation (material ageing, abrasion, erosion through sparking like partial discharges can weaken the withstand capability against high voltage) and lead to unexpected breakdown in the insulation.

The method comprises removing the conductive bar 4 from the slot 3 of the electric machine 2.

Thus removing the original insulation 6 from the conductive element 5 and applying new insulation 7 around the conductive element 5.

Removing the conductive bar 4 from the slot 3, removing the original insulation 6 from the conductive element 5 and applying new insulation 7 around the conductive element 5 are carried out on the yard 1.

Since all operations are carried out on the yard 1, there is no need to order new conductive bars to a workshop and wait for them.

Preferably, a final size 8 for the new insulation 7 is defined and the new insulation 7 is applied with a size 9 larger than the final size 8.

Then the part 10 of the new insulation 7 in excess to the final size 8 is removed.

This allows precise dimensions and plane surfaces for the final size 8 of the new insulation 7.

Removing the part 10 of the new insulation 7 in excess to the final size 8 includes partially removing new insulation 7 from each side 11 of the cross section of the new insulation 7.

The final size 8 of the new insulation 7 is preferably equal to the size of the original insulation 6; this allows the new conductive bar 12 (having the conductive element 5 and the new insulation 7 having the final size 8 equal to the size of the original insulation 6) to be applied to the same electric machine from which the conductive bars 4 was removed (in the same or different slot 3).

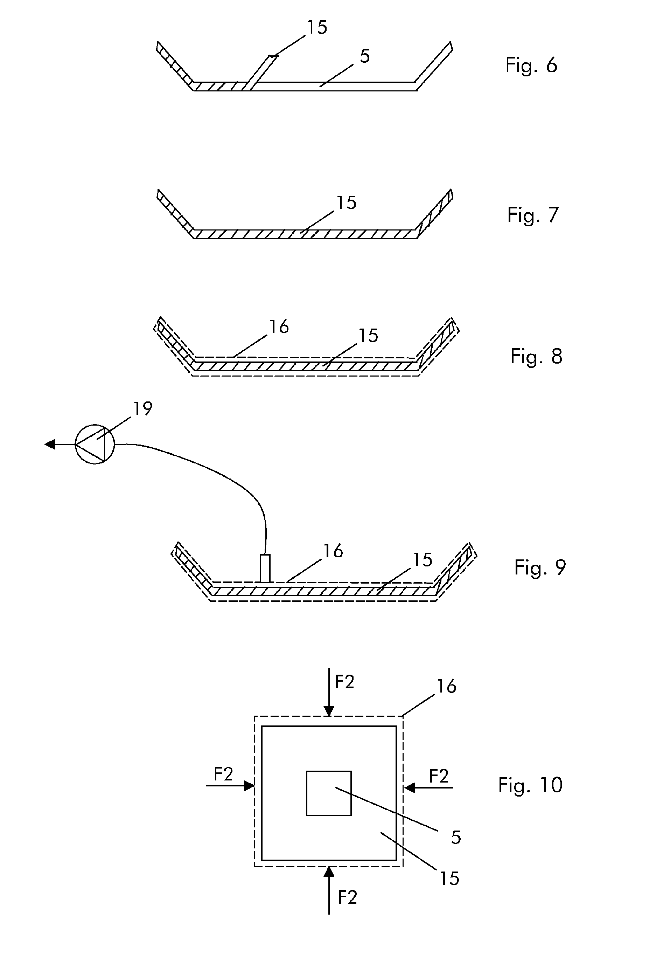

Applying new insulation 7 around the conductive element 5 includes:
wrapping an insulating tape 15 around the conductive element 5 (figure 6, 7)
providing a flexible sleeve 16 around the conductive element 5 having the insulating tape 15,
applying a vacuum into the flexible sleeve 16, applying heat to the insulating tape 15 to form the new insulation 7.

The tape can be a tape that is pre impregnated with a resin; in this case preferably the tape is a pre impregnated mica tape.

Alternatively the tape can be a tape that is not pre impregnated with a resin; in this case an impregnating resin is supplied into the flexible sleeve 16 after applying a vacuum and before applying heat.

For example, the resin can be contained in a tank 18 and the position of the tank 18 (in particular its height) can be regulated with respect to the position (in particular its height) of the flexible sleeve 16 to regulate the supply pressure of the resin.

In addition, it is also possible that the accuracy of the final shape of new insulation is improved by providing forming shapes around the insulated bar covered with the sleeve (before curing) and held together e.g. with shrink tape or clamps or similar tooling. This could reduce the effort for removal of new insulation.

In the following different embodiments are described in details; it is clear that any of the steps described can be implemented in the method independently of the others.

Figure 1 shows the yard with the electric machine. A conductive bar 4 (stator bar) is removed from this electric machine (figure 2 and 3 show a side view and a cross section of the conductive bar 4).

Thus the original insulation 6 is removed from the conductive element 5 of the conductive bar 4; this can be done by hand, for example by cutting the original insulation 6 in 17 and then ripping the original insulation 6 as indicated by the arrows F (figure 4); figure 5 shows the cross section of the conductive element 5 without the original insulation 6.

Thus the conductive element 5 is wrapped with an insulating tape 15 that can be a pre impregnated tape (preferably mica tape) or a non pre impregnated tape (preferably mica tape); figure 7 shows the conductive element 5 with the insulating tape 15 around it.

The conductive element 5 with the insulating tape 15 around it is thus inserted into a flexible sleeve 16 (figure 8).

The flexible sleeve 16 can be of the kind disclosed in EP 2 339 722 or US 6 840 749. For example the flexible sleeve can be a plastic sleeve. Alternatively the flexible sleeve 16 can be realised by wrapping a tape around the insulating tape 15 with overlapping, such that the overlapping parts of this tape stick each other realising the flexible sleeve.

Then the flexible sleeve is connected to a vacuum pump 19 (figures 9, 10) to bring the inside of the flexible sleeve 16 in under pressure. A pressure of between 0.1-0.2 bar can be achieved into the flexible sleeve 16 this way. This under pressure has two effects:
- it extracts air and other gas contained in the insulating tape 15, to achieve an insulation with better electrical properties;
- it cause the environment (having a pressure of about 1 bar) to press the flexible sleeve 16 (as indicated by arrows F2) and thus the tape 15.

Thus, in case the insulating tape 15 is a pre impregnated tape, heat is applied to cure the resin.

Heat can be applied for example by providing a thermo covering 20 around the flexible sleeve 20; for example the thermo covering 20 can include a tape that can be electrically heated (figure 11). Alternatively, heat can be provided by inserting the flexible sleeve 16 with the conductive element 5 and the insulating tape 15 around it into an oven 21; this is preferably done for small conductive elements 5 (figure 12). A further possibility to apply heat is to connect the conductive element 5 to electrodes 22 and have current passing through it to heat it; this is preferably done with large conductive elements 5 (figure 13).

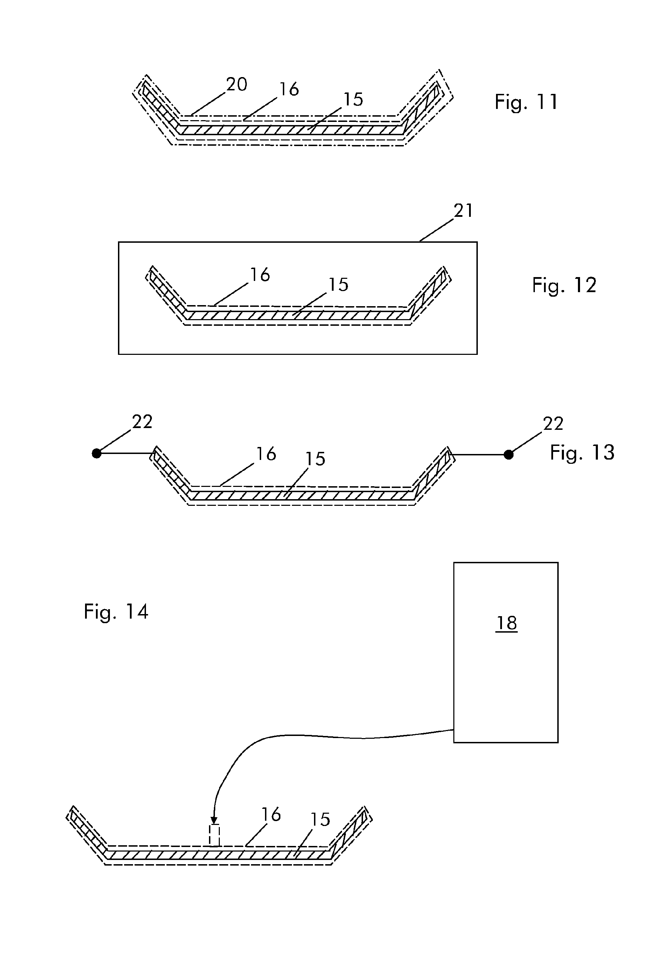

In case the insulating tape 15 is a non pre impregnated tape, the flexible sleeve 16 is connected to the tank 18 and resin is supplied into the flexible sleeve 16 (figure 14).

Then the flexible sleeve with the conductive element 5 and insulating tape 16 around it is heated (for example as indicated with reference to figures 11-13) to cure the resin.

After curing the resin, the insulating tape 15 and cured resin form the new insulation 7 for the conductive element 5.

Then the part 10 of the new insulation 7 that exceeds the final size 8 is removed. This can be done for example with milling machines.

After removal of the part 10, if the final size 8 was chosen equal to the size 9 of the original insulation 6, the new conductive bar 12 is obtained having the same conductive element 5 as the conductive bar 4 but a new insulation 7 having the pre fixed size 8.

Naturally the features described may be independently provided from one another.

In practice the materials used and the dimensions can be chosen at will according to requirements and to the state of the art.

### REFERENCE NUMBERS

- 1: yard
- 2: electric machine
- 3: slot
- 4: conductive bar
- 5: conductive element
- 6: original insulation
- 7: new insulation
- 8: final size
- 9: size
- 10: part
- 11: side
- 12: new conductive bar
- 15: insulating tape
- 16: flexible sleeve
- 17: cutting
- 18: tank
- 19: vacuum pump
- 20: thermo covering
- 21: oven
- 22: electrode
- F: ripping
- F2: pressing

## Claims

1. A method for retrofit a conductive bar (4),
wherein a yard (1) includes an electric machine (2) having a slot (3) housing the conductive bar (4), wherein the conductive bar (4) comprises:
a conductive element (5),
original insulation (6) around the conductive element (5),
wherein the method comprises:
removing the conductive bar (4) from the slot (3), removing the original insulation (6) from the conductive element (5),
applying new insulation (7) around the conductive element (5),
the method being **characterised in that** removing the conductive bar (4) from the slot (3), removing the original insulation (6) from the conductive element (5), applying new insulation (7) around the conductive element (5) are carried out on the yard (1).

2. The method of claim 1, **characterised by**:
defining a final size (8) for the new insulation (7),
applying the new insulation (7) with a size larger than the final size (8),
removing the part (10) of the new insulation (7) in excess to the final size (8).

3. The method of claim 2, **characterised in that** removing the part (10) of the new insulation (7) in excess to the final size (8) includes partially removing new insulation (7).

4. The method of claim 3, **characterised in that** partially removing new insulation (7) includes partially removing new insulation from each side (11) of the cross section of the new insulation (7).

5. The method of claim 2, **characterised in that** the final size (8) of the new insulation (7) is equal to the size (9) of the original insulation (6).

6. The method of claim 1, **characterised in that** applying new insulation (7) around the conductive element (5) includes:
wrapping an insulating tape (15) around the conductive element (5),
providing a flexible sleeve (16) around the conductive element (5) having the insulating tape (15),
applying a vacuum into the flexible sleeve (16),
applying heat to the insulating tape (15) to form the new insulation (7).

7. The method of claim 2, **characterised in that** the insulating tape (15) in pre-impregnated with a resin.

8. The method of claim 2, **characterised by** supplying an impregnating resin into the flexible sleeve (16) after applying a vacuum and before applying heat.

9. The method of claim 8, **characterised in that** the resin is contained in a tank (18), wherein the position of the tank (18) is regulated with respect to the position of the flexible sleeve (16) to regulate the supply pressure of the resin.

10. The method of claim 1, **characterised by** providing forming shapes around the insulated bar covered with the sleeve before curing.
